# EUROPÄISCHE PATENTANMELDUNG

(11) **EP 2 037 690 A1**
(43) Veröffentlichungstag der Anmeldung: **18.03.2009**
(21) Anmeldenummer: 07116549.2
(22) Anmeldetag: 17.09.2007
(51) Int. Cl.: H04N 13/00

(54) **Vorrichtung und Verfahren zur großflächigen Projektion von Filmbildern auf eine Bildwand**

(71) Anmelder: KINOTON GmbH, D-82110 Germering (DE)
(72) Erfinder: Dobler, Christoph, 82110, Germering (DE)
(74) Vertreter: Rupprecht, Kay

(57) **Zusammenfassung**

Die Erfindung betrifft eine Vorrichtung zur großflächigen Projektion von digitalen Bildern auf eine Bildwand (2), mit einer Lichtquelle (4) und einem Reflektor (6) zum Erzeugen eines Lichtkegels (7) und zum Projizieren des von der Lichtquelle (4) emittierten Lichts durch eine Bilderzeugungseinheit (8) und ein Objektiv (10) auf die Bildwand (2), und mit einem mittels eines Motors (12) antreibbaren 3D-Sektoren-Polarisationsrad (14) mit Polarisationssektoren (S₁, S₂, S₃, S₄, Sₙ) in dem Strahlengang des von der Lichtquelle (4) emittierten Lichts. Die Erfindung betrifft des Weiteren ein Verfahren zur großflächigen Projektion von digitalen Bildern auf eine Bildwand (2), bei dem eine Lichtquelle (4) Licht emittiert, welches mittels eines Reflektors (6) einen Lichtkegel (7) erzeugt und durch eine Bilderzeugungseinheit (8) und ein Objektiv (10) auf die Bildwand (2) projiziert, und bei dem ein mittels eines Motors (12) antreibbares 3D-Sektoren-Polarisationsrad (14) mit Polarisationssektoren (S₁, S₂, S₃, S₄, Sₙ) in dem Strahlengang des von der Lichtquelle (4) emittierten Lichts rotiert. Mit dem Ziel, eine deutliche Steigerung der Bildqualität zu erreichen, ist der Motor (6) des 3D-Sektoren-Polarisationsrads (14) derart ausgebildet ist, dass er das 3D-Sektoren-Polarisationsrad (14) schrittweise antreiben kann, und dass des Weiteren eine elektronische Steuereinheit (16) vorgesehen ist, die den Motor (12) des 3D-Sektoren-Polarisationsrads (14) taktet und mit dem Bildlauf der Bilderzeugungseinheit (8) derart synchronisiert, dass jedes Einzelbild durch den seiner Polarisation entsprechenden Polarisationssektor (S₁, S₂, S₃, S₄, Sₙ) projiziert wird. Mit demselben Ziel in Bezug auf das Verfahren treibt der Motor (12) das 3D-Sektoren-Polarisationsrad (14) schrittweise an und eine elektronische Steuereinheit (16) taktet den Motor (12) und synchronisiert die schrittweise Drehung des 3D-Sektoren-Polarisationsrads (14) derart mit dem Bildlauf der Bilderzeugungseinheit (8), dass jedes Einzelbild durch den seiner Polarisation entsprechenden Polarisationssektor (S₁, S₂, S₃, S₄, Sₙ) projiziert wird.

## Beschreibung

Die Erfindung betrifft eine Vorrichtung zur großflächigen Projektion von digitalen Bildern auf eine Bildwand, mit einer Lichtquelle und einem Reflektor zum Erzeugen eines Lichtkegels und zum Projizieren des von der Lichtquelle emittierten Lichts durch eine Bilderzeugungseinheit und ein Objektiv auf die Bildwand, und mit einem mittels eines Motors antreibbaren 3D-Sektoren-Polarisationsrad mit Polarisationssektoren in dem Strahlengang des von der Lichtquelle emittierten Lichts. Die Erfindung betrifft ferner ein Verfahren zur großflächigen Projektion von digitalen Bildern auf eine Bildwand, bei dem eine Lichtquelle Licht emittiert, welches mittels eines Reflektors einen Lichtkegel erzeugt und durch eine Bilderzeugungseinheit und ein Objektiv auf die Bildwand projiziert, und bei dem ein mittels eines Motors antreibbares 3D-Sektoren-Polarisationsrad mit Polarisationssektoren in dem Strahlengang des von der Lichtquelle emittierten Lichts rotiert.

Zur großflächigen Projektion von Bildern, die ein Betrachter dreidimensional wahrnehmen kann, wird das Verfahren der Raumbildprojektion, auch Stereoprojektion genannt, angewandt. Diese stereoskopische Betrachtungsmethode basiert auf der erforderlichen Trennung von linkem und rechtem Bild, das auch als Kanaltrennung bekannt ist. Dabei werden zwei Bilder, die eine Szene jeweils in der Perspektive der Augen eines Betrachters wiedergeben, als sogenannte Halb- oder Teil-Bilder übereinander projiziert und auf einer Projektionsfläche angezeigt. Dabei muss sichergestellt werden, dass der Betrachter mit dem einen Auge nur das eine und mit dem anderen Auge nur das andere Teil-Bild sieht, damit das menschliche Gehirn einen räumlichen Eindruck errechnen kann.

Eine bekannte Projektionstechnik zur Umsetzung dieses Konzepts in Videoprojektoren beziehungsweise Beamern ist die Polarisationsfiltertechnik, bei der die Kanaltrennung mit polarisiertem Licht erreicht wird. Dabei befinden sich jeweils um 90° versetzte Polfilterfolien vor den Projektionsobjektiven und in den Polfilterbrillen der Betrachter. Das Halb-Bild für das linke Auge des Betrachters ist dann zum Beispiel waagrecht und das Halb-Bild für das rechte Auge senkrecht polarisiert. Der Betrachter kann dann unter Verwendung einer Polfilterbrille, deren Gläser in entsprechender Weise ausgeprägt sind, durch das eine Glas das eine Halb-Bild, und durch das andere Glas der Polfilterbrille das andere Halb-Bild und somit das gesamte Bild im 3D-Effekt sehen. Zur Aufrechterhaltung des Polarisationsstatus' des Lichts ist eine metallisch beschichtete Bildwand notwendig. Eine weiße Bildwand würde das Licht wieder zerstreuen und die Kanaltrennung wäre aufgehoben.

Um das eingangs geschilderte Konzept umzusetzen, ist eine Vorrichtung notwendig, die den zwei Halb-Bildern die erforderlichen Polarisationen verleiht. Eine solche Vorrichtung ist beispielsweise aus der DE 196 26 097 C1 bekannt, die eine drehbare Polarisationsscheibe im Strahlengang des von einer Lichtquelle emittierten Lichts vorsieht. Die Polarisationsscheibe ist kreisförmig und weist Sektoren mit Polarisationsfiltern mit unterschiedlichen Polarisationsrichtungen auf. Durch die Drehung der Polarisationsscheibe wird ein durch sie tretender Lichtstrahl abwechselnd polarisiert. Der Lichtstrahl tritt bei der Polarisation aufgrund der Drehbewegung der Scheibe durch einen sich drehend bewegenden Polarisationssektor des Polarisationsfilters. Dadurch enthält der polarisierte Lichtstrahl ein Gemisch aus verschiedenen Polarisationsrichtungen, dessen Homogenität umso kleiner ist, je größer der Sektor ist, durch den der Lichtstrahl hindurchtritt. Dies schwächt die eindeutige Trennung zwischen den unterschiedlich polarisierten Halb-Bildern ab und damit auch den erzielbaren 3D-Effekt.

Aufgrund der kontinuierlichen Drehbewegung der Scheibe kann es zudem passieren, dass der von der Lichtquelle emittierte Lichtstrahl die ihm zur Verfügung stehende Sektorenfläche des seiner Polarisation entsprechenden Polarisationssektors nicht vollständig und exakt durchdringt, sondern ein Teil des Lichtstrahls auch die Fläche eines anderen, benachbarten Polarisationssektors unterschiedlicher Polarisationsrichtung durchdringt. Die Folge dieses gleichzeitigen Übergreifens des emittierten Lichtstrahls auf zwei Polarisationssektorenflächen mit voneinander verschiedener Polarisation sind sogenannte Verschwimmeffekte, die an beziehungsweise zwischen den Rändern der auf diese Weise durch den Lichtstrahl projizierten Bilder auftreten. Diese beeinträchtigen jedoch maßgeblich die Bildschärfe der auf die Bildwand projizierten Bilder und reduzieren somit die Qualität der dreidimensionalen Bilddarstellung für den Betrachter. Zudem senkt dieser Übergreifeffekt die mögliche Lichtausbeute, wenn nicht die vollständige zur Verfügung stehende Sektorenfläche der entsprechenden Polarisationsrichtung für das Durchtreten des Lichtstrahls benutzt wird. Dies wirkt sich ebenfalls negativ auf die Qualität der projizierten 3D digitalen Bilder aus.

Der vorliegenden Erfindung liegt deshalb die Aufgabe zugrunde, eine Vorrichtung zur Großbildprojektion mit einer Polarisationseinrichtung sowie ein entsprechendes Verfahren zur großflächigen Projektion von digitalen Bildern auf eine Bildwand mit einer Vorrichtung der eingangs genannten Art derart weiterzubilden, dass die aus dem Stand der Technik bekannten und oben diskutierten Probleme und Nachtteile vermindert und insbesondere eine deutliche Steigerung der Bildqualität erreicht werden kann.

Diese Aufgabe wird erfindungsgemäß durch eine Vorrichtung zur großflächigen Projektion von digitalen Bildern auf eine Bildwand der eingangs genannten Art gelöst, bei der der Motor des 3D-Sektoren-Polarisationsrads derart ausgebildet ist, dass er das 3D-Sektoren-Polarisationsrad schrittweise antreiben kann, und dass eine elektronische Steuereinheit den Motor taktet und die schrittweise Drehung des 3D-Sektoren-Polarisationsrads derart mit dem Bildlauf der Bilderzeugungseinheit synchronisiert, dass jedes Einzelbild durch den seiner Polarisation entsprechenden Polarisationssektor projiziert wird.

Weiterhin wird die Aufgabe durch ein Verfahren gelöst, bei welchem zur großflächigen Projektion von digitalen Bildern auf eine Bildwand, eine Lichtquelle Licht emittiert, welches mittels eines Reflektors einen Lichtkegel erzeugt und durch eine Bilderzeugungseinheit und ein Objektiv auf die Bildwand projiziert wird, und bei dem ein mittels eines Motors antreibbares 3D-Sektoren-Polarisationsrad mit Polarisationssektoren in dem Strahlengang des von der Lichtquelle emittierten Lichts rotiert, wobei der Motor das 3D-Sektoren-Polarisationsrad schrittweise antreibt und eine elektronische Steuereinheit den Motor taktet und die schrittweise Drehung des 3D-Sektoren-Polarisationsrads derart mit dem Bildlauf der Bilderzeugungseinheit synchronisiert, dass jedes Einzelbild durch den seiner Polarisation entsprechenden Polarisationssektor projiziert wird.

Der dem Fachmann bekannte Fachbegriff für die Bilderzeugungseinheit lautet "Lightengine". Im Folgenden werden beiden Begriffe nebeneinander verwendet.

Das 3D-Sektoren-Polarisationsrad ist bekanntlich in Sektoren unterteilt, die eine voneinander verschiedene Polarisation aufweisen. Die Anzahl der auf dem 3D-Sektoren-Polarisationsrad vorhandenen Polarisationssektoren beträgt dabei stets ein Vielfaches von 2 * n mit n = 1, 2, 3, 4 usw., so dass auf einem 3D-Sektoren-Polarisationsrad gleichgroße Flächenabschnitte von Polarisationssektoren (S₁, S₂, S₃, S₄, Sₙ) in Abständen von 30°, 45°, 60° oder 90° etc. ausgebildet werden können.

Ein wesentlicher Punkt der Erfindung liegt darin, dass durch die synchronisierte Ansteuerung der Bilderzeugungseinheit und des 3D-Sektoren-Polarisationsrads entsprechend eines von der Bilderzeugungseinheit vorgegebenen Bildlaufs eine synchronisierte und schrittweise Drehbewegung des 3D-Sektoren-Polarisationsrads derart ermöglicht wird, dass jedes von der Bilderzeugungseinheit erzeugte Einzelbild, das nacheinander jeweils für das linke und rechte Auge des Betrachters erzeugt wird, exakt durch den seiner Polarisation entsprechenden Polarisationssektor projiziert wird. Die Projektion der gewünschten Bilder durch den Lichtstrahl erfolgt also in einer Weise, dass die jeweilige Halb-Bilderzeugung synchronisiert zu den Polarisationswechseln des 3D-Sektoren-Polarisationsrads erfolgt. Dadurch werden die eingangs beschriebenen Verschwimmeffekte sowie eine Einbuße an Lichtausbeute wirksam vermieden.

Bevorzugte Weiterbildungen der Erfindung sind bezüglich der Vorrichtung in den Unteransprüchen 2 bis 5 und bezüglich des Verfahrens in dem Unteranspruch 7 angegeben.

Für die Anordnung des 3D-Sektoren-Polarisationsrads in der Gesamtvorrichtung sind vorzugsweise drei Alternativen vorgesehen:

Eine erste Alternative besteht darin, dass das 3D-Sektoren-Polarisationsrad mit den entsprechenden Ansteuerungskomponenten im Strahlengang des von der Lichtquelle emittierten Lichts zwischen der Lichtquelle und der Bilderzeugungseinheit angeordnet ist. Dadurch wird erreicht, dass das 3D-Sektoren-Polarisationsrad so als Komponente in die Bilderzeugungseinheit integriert werden kann, dass es für Wartungs- und Reparaturzwecke über das Lampengehäuse gut erreichbar ist. Darüber hinaus kann das 3D-Sektoren-Polarisationsrad nahezu beliebig nah in den Fokus des Lichtkegels positioniert werden, wodurch die Größe, also der Umfang des 3D-Sektoren-Polarisationsrads kleiner dimensionierbar ist.

Eine zweite Alternative sieht vor, dass das 3D-Sektoren-Polarisationsrad mit den entsprechenden Ansteuerungskomponenten zwischen der Bilderzeugungseinheit und dem Objektiv angeordnet ist. Wenngleich die Erreichbarkeit des 3D-Sektoren-Polarisationsrads etwas darunter leidet, ist auch bei dieser Anordnungsalternative eine beliebig nahe Positionierung in Bezug auf den Fokus des aus der Bilderzeugungseinheit austretenden Lichtkegels und damit eine vorteilhafte Einflussnahme auf den Umfang des 3D-Sektoren-Polarisationsrads möglich.

In einer dritten Alternative ist vorgesehen, dass das 3D-Sektoren-Polarisationsrad nach dem Grundobjektiv angeordnet ist. Dadurch können bestehende Projektorsysteme durch mechanisches Befestigen des 3D-Sektoren-Polarisationsrads vor dem Objektiv sehr einfach nachgerüstet werden.

Als weitere bevorzugte Weiterbildung der Erfindung ist es vorgesehen, dass der Bilderzeugungseinheit eine eigene elektronische Steuereinheit zugeordnet ist. Diese hat die Aufgabe, den Bildlauf zu takten und mit dem Sektorenfortschritt des 3D-Sektoren-Polarisationsrads derart zu synchronisieren, dass jedes Einzelbild durch den seiner Polarisation entsprechenden Polarisationssektor (S₁, S₂, S₃, S₄, Sₙ) projiziert wird. Auf diese Weise wird die Ausfallsicherheit der Bilderzeugungseinheit erhöht, da durch den Ausfall einer elektronischen Steuereinheit die andere elektronische Steuereinheit identische Funktionen in Bezug auf die Synchronisation der Einzelbilder mit dem 3D-Sektoren-Polarisationsrad ausführen kann. Ein weiterer Vorteil, sowohl die Bilderzeugungseinheit als auch das 3D-Sektoren-Polarisationsrad mit einer eigenen elektronischen Steuereinheit ausgerüstet zu haben, besteht darin, dass wahlweise entweder die Steuerung der Bilderzeugungseinheit oder die Steuerung des 3D-Sektoren-Polarisationsrads eine sogenannte "Masterfunktion" im Synchronisationszusammenspiel zwischen der Bilderzeugungseinheit und dem 3D-Sektoren-Polarisationsrad ausüben kann.

Bei einer vorteilhaften Ausführung des erfindungsgemäßen Verfahrens ist vorgesehen, dass die elektronische Steuereinheit der Lightengine den Bildlauf mit dem Sektorenfortschritt des 3D-Sektoren-Polarisationsrads derart synchronisiert, dass jedes Einzelbild durch den seiner Polarisation entsprechenden Polarisationssektor (S₁, S₂, S₃, S₄, Sₙ) projiziert wird.

Die Erfindung wird nachfolgend anhand von Ausführungsbeispielen sowie unter Zuhilfenahme einer Zeichnung näher erläutert.

Es zeigen:
Fig. 1. eine schematische Darstellung einer Vorrichtung einer Großbildprojektion gemäß dem Stand der Technik;
Fig. 2 eine schematische Darstellung einer Vorrichtung zur Großbildprojektion gemäß der vorliegenden Erfindung in einer ersten Ausführungsform;
Fig. 3 eine schematische Darstellung einer Vorrichtung zur Großbildprojektion gemäß der vorliegenden Erfindung in einer zweiten Ausführungsform;
Fig. 4 eine schematische Darstellung einer Vorrichtung zur Großbildprojektion gemäß der vorliegenden Erfindung in einer dritten Ausführungsform; und
Fig. 5a bis 5d verschiedene Darstellungen eines 3D-Sektoren-Polarisationsrads mit unterschiedlichen Sektoreneinteilungen.

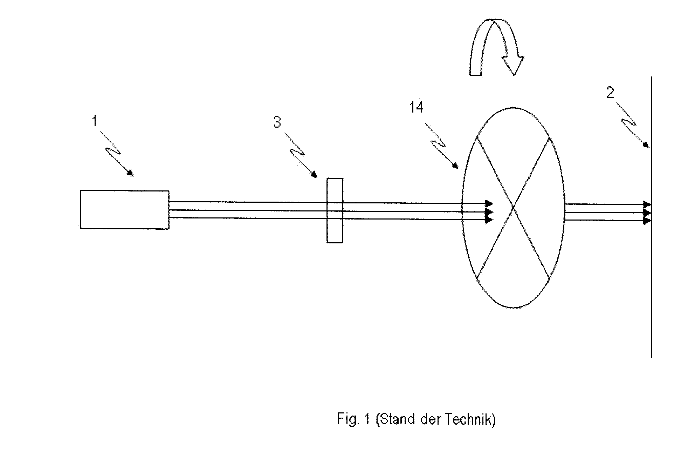

Fig. 1 zeigt schematisch und vereinfacht ein Projektorensystem, mit dem dreidimensional wahrnehmbare Bilder projiziert werden können, wie es beispielsweise aus der DE 196 26 097 C1 bekannt ist. Dabei wird Licht in Pfeilrichtung von einer Lichtquelle 1 durch ein Linsensystem 3 geleitet. Die zur Darstellung von Bildern in einem solchen Projektorsystem erforderliche Bilderzeugungseinheit ist hier zur Vereinfachung weggelassen. Ein drehbares Polarisationsrad 14 mit beispielsweise vier Sektoren, das in dieser Ausführungsform der Abbildung hinter dem Linsensystem 3 angeordnet ist, sorgt dafür, dass die erzeugten einzelnen Halb-Bilder unterschiedlich polarisiert werden. Das Halb-Bild für das linke Auge wird beispielsweise waagrecht, das Halb-Bild für das rechte Auge wird senkrecht polarisiert. Das sich kontinuierlich drehende Polarisationsrad wechselt dazu synchron mit der Erzeugung der Halb-Bilder die Polarisationsrichtung. Durch die unterschiedliche Polarisierung nimmt ein Betrachter, der eine mit entsprechenden Polarisationsfiltern versehene Brille trägt, das projizierte Bild dreidimensional wahr.

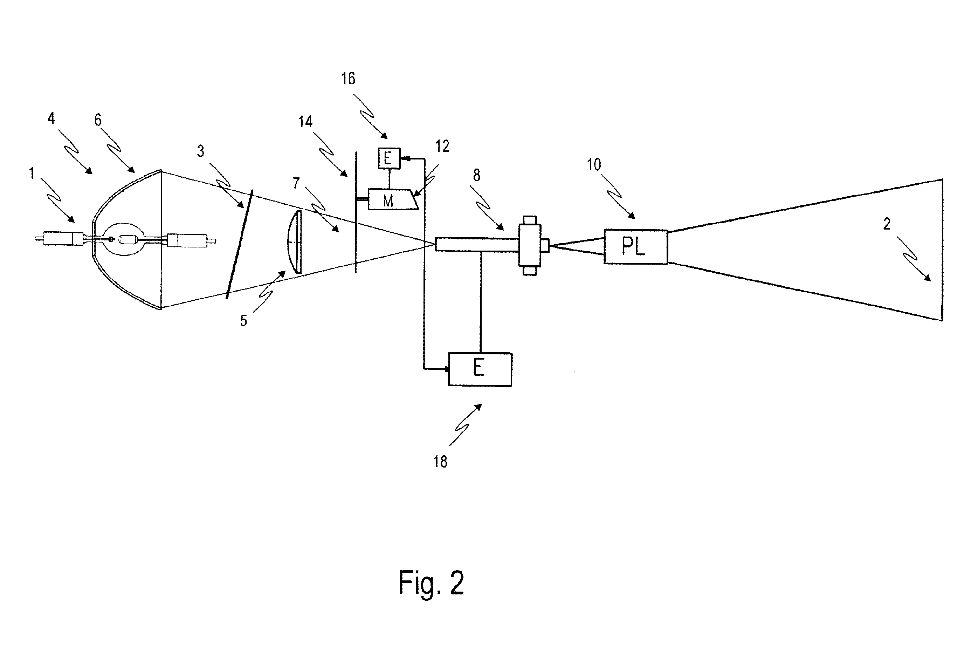

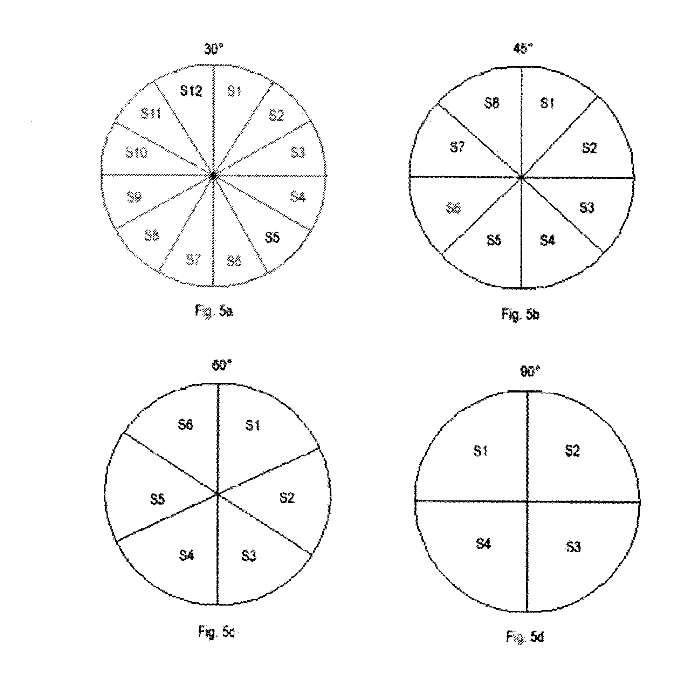

Fig. 2 zeigt eine erste Ausführungsform der erfindungsgemäßen Vorrichtung zur Großbildprojektion in einer schematischen Schnittdarstellung. Die gesamte dargestellte Vorrichtung enthält eine Projektionslampe 1 in Form einer Xenonhochdrucklampe oder einer anderen handelsüblichen Lampenart wie etwa einer LED, HTI oder HMI, die aus einer Lichtquelle 4 und einem Reflektor 6 aufgebaut ist und einen Lichtkegel 7 erzeugt. Dieser Lichtkegel 7 wird durch einen je nach Projektionstechnologie bzw. Hersteller optionalen Umlenkspiegel/UV- bzw. IR-Filter 3, eine Sammellinse 5 und danach durch eine Bilderzeugungseinheit 8 und ein Objektiv 10 gelenkt und auf eine Bildwand 2 projiziert. Die Bilderzeugungseinheit 8 ist das Kernstück des digitalen Video-/Cinema-Projektors, der je nach Projektionstechnologie bzw. Hersteller auf eine der bekannten Technologien wie etwa der DLP-, DMD-, LCD-, LCOS-, SXRD-, D-ILA- Technologie oder der 1-/3-Chip-Technik aufsetzen kann. Sie wird in der auf diesem Gebiet üblichen Fachsprache kurz als "Lightengine" bezeichnet und weist in einer an sich bekannten Weise eine elektronische Steuereinheit 18 auf, welche die Bereitstellung der vorstehend beschriebenen linken und rechten Halb-Bilder steuert. Zwischen der Projektionslampe 1 und der Bilderzeugungseinheit 8 ist - in diesem Ausführungsbeispiel - ein 3D-Sektoren-Polaristionsrad 14 in dem Strahlengang des von der Lichtquelle 4 emittierten Lichts angeordnet. Das 3D-Sektoren-Polaristionsrad 14 ist in 2*n Polarisationssektoren (S₁, S₂, S₃, S₄, Sₙ) unterteilt (siehe Figuren 5a bis 5d). Das Polarisationsrad 14 wird mittels eines Motors 12 schrittweise angetrieben, der zum Beispiel als bürstenloser Servomotor mit Encoder oder als Schrittmotor ausgebildet sein kann. Dem Polarisationsrad 14 ist eine elektronische Steuereinheit 16 zugeordnet, die den Motor 12 taktet und mit dem Bildlauf der Bilderzeugungseinheit 8 derart synchronisiert, dass jedes Einzelbild durch den seiner Polarisation entsprechenden Polarisationssektor (S₁, S₂, S₃, S₄, Sₙ) projiziert wird. Zu diesem Zweck ist die elektronische Steuereinheit 18 der Bilderzeugungseinheit 8 mit der elektronischen Steuereinheit 16 verbunden, um die erforderlichen Steuersignale zur synchronisierten Ansteuerung des Motors 12 des 3D-Sektoren-Polarisationsrads 14 zu übermitteln. Welche der beiden elektronischen Steuereinheiten 16, 18 bei der Synchronisation die sogenannte "Masterfunktion" übernimmt, ist hierbei grundsätzlich beliebig.

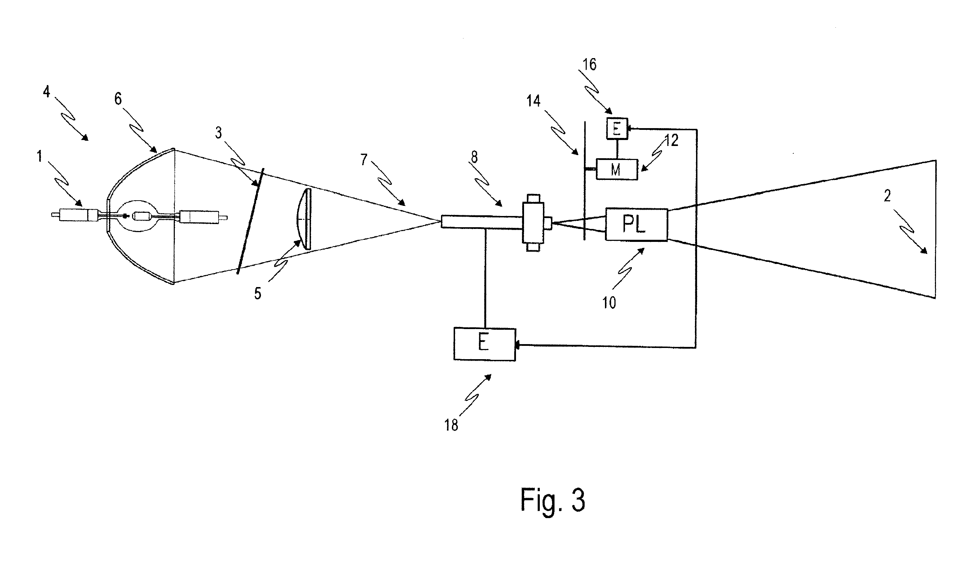

Fig. 3 zeigt eine zweite Ausführungsform der erfindungsgemäßen Vorrichtung zur Großbildprojektion im schematischen Schnitt. Diese zweite Ausführungsform unterscheidet sich von der ersten Ausführungsform der Fig. 2 darin, dass das 3D-Sektoren-Polarisationsrad 14 hier zwischen der Bilderzeugungseinheit 8 und dem Objektiv 10 angeordnet ist.

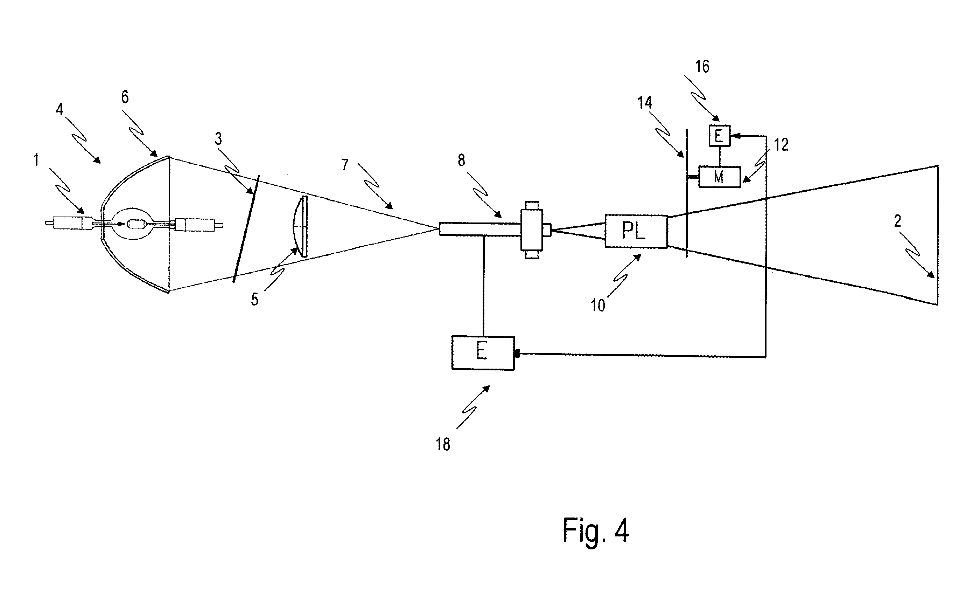

Fig. 4 zeigt eine dritte Ausführungsform der erfindungsgemäßen Vorrichtung zur Großbildprojektion im schematischen Schnitt. Diese dritte Ausführungsform unterscheidet sich von den vorangegangen Ausführungsformen der Fig. 2 und Fig. 3 darin, dass das 3D-Sektoren-Polarisationsrad 14 nun nach dem Objektiv 10 angeordnet ist. Diese Ausführungsform ist speziell dazu geeignet, um bereits bestehende Projektorensysteme nachträglich entsprechend erweitern zu können, da das 3D-Sektoren-Polarisationsrad 14 lediglich elektrisch bzw. elektronisch über eine entsprechende Verbindung mit der Bilderzeugungseinheit 8 gekoppelt werden muss.

Fig. 5 zeigt verschiedene Darstellungen des 3D-Sektoren-Polarisationsrads mit unterschiedlichen Sektoreneinteilungen. Die Anzahl der Sektoren auf dem Polarisationsrad entspricht stets einem Vielfachen von 2*n mit n=1, 2, 3, 4 usw. Auf diese Weise erhält man 3D-Sektoren-Polarisationsräder, die beispielsweise wie in der Fig. 5a in 30°-Sektoren, in Fig. 5b in 45°-Sektoren, in Fig. 5c in 60°-Sektoren und in Fig. 5d in 90°-Sektoren aufgeteilt sind.

### Bezugszeichenliste

1 Projektionslampe
2 Bildwand
3 Umlenkspiegel / UV-IR-Filter
4 Lichtquelle
5 Sammellinse
6 Reflektor
7 Lichtkegel
8 Bilderzeugungseinheit "Lightengine"
10 Objektiv
12 Motor
14 3D-Sektoren-Polarisationsrad
16 Elektronische Steuerungseinheit 3D Antrieb
18 Elektronische Steuerungseinheit "Lightengine"

## Patentansprüche

1. Vorrichtung zur großflächigen Projektion von digitalen Bildern auf eine Bildwand (2), mit einer Lichtquelle (4) und einem Reflektor (6) zum Erzeugen eines Lichtkegels (7) und zum Projizieren des von der Lichtquelle (4) emittierten Lichts durch eine Bilderzeugungseinheit (8) und ein Objektiv (10) auf die Bildwand (2), und mit einem mittels eines Motors (12) antreibbaren 3D-Sektoren-Polarisationsrad (14) mit Polarisationssektoren (S₁, S₂, S₃, S₄, Sₙ) in dem Strahlengang des von der Lichtquelle (4) emittierten Lichts,
**dadurch gekennzeichnet, dass**
der Motor (12) des 3D-Sektoren-Polarisationsrads (14) derart ausgebildet ist, dass er das 3D-Sektoren-Polarisationsrad (14) schrittweise antreiben kann, und dass eine elektronische Steuereinheit (16) vorgesehen ist, die den Motor (12) des 3D-Sektoren-Polarisationsrads (14) taktet und mit dem Bildlauf der Bilderzeugungseinheit (8) derart synchronisiert, dass jedes Einzelbild durch den seiner Polarisation entsprechenden Polarisationssektor (S₁, S₂, S₃, S₄, Sₙ) projiziert wird.

2. Vorrichtung nach Anspruch 1, wobei das 3D-Sektoren-Polarisationsrad (14) zwischen der Lichtquelle (4) und der Bilderzeugungseinheit (8) angeordnet ist.

3. Vorrichtung nach Anspruch 1, wobei das 3D-Sektoren-Polarisationsrad (14) zwischen der Bilderzeugungseinheit (8) und dem Objektiv (10) angeordnet ist

4. Vorrichtung nach Anspruch 1, wobei das 3D-Sektoren-Polarisationsrad (14) nach dem Objektiv (10) angeordnet ist

5. Vorrichtung nach einem der Ansprüche 1-4,
**dadurch gekennzeichnet, dass**
der Bilderzeugungseinheit (8) eine eigene elektronische Steuereinheit (18) zugeordnet ist, welche den Bildlauf taktet und mit dem Sektorenfortschritt des 3D-Sektoren-Polarisationsrads (14) derart synchronisiert, dass jedes Einzelbild durch den seiner Polarisation entsprechenden Polarisationssektor (S₁, S₂, S₃, S₄, Sₙ) projiziert wird.

6. Verfahren zur großflächigen Projektion von digitalen Bildern auf eine Bildwand (2), bei dem eine Lichtquelle (4) Licht emittiert, welches mittels eines Reflektors (6) einen Lichtkegel (7) erzeugt und durch eine Bilderzeugungseinheit (8) und ein Objektiv (10) auf die Bildwand (2) projiziert, und bei dem ein mittels eines Motors (12) antreibbares 3D-Sektoren-Polarisationsrad (14) mit Polarisationssektoren (S₁, S₂, S₃, S₄, Sₙ) in dem Strahlengang des von der Lichtquelle (4) emittierten Lichts rotiert,
**gekennzeichnet durch** folgende Verfahrensschritte:
(a) der Motor (12) treibt das 3D-Sektoren-Polarisationsrad (14) schrittweise an;
(b) eine elektronische Steuereinheit (16) taktet den Motor (12) und synchronisiert die schrittweise Drehung des 3D-Sektoren-Polarisationsrads (14) derart mit dem Bildlauf der Bilderzeugungseinheit (8), dass jedes Einzelbild **durch** den seiner Polarisation entsprechenden Polarisationssektor (S₁, S₂, S₃, S₄, Sₙ) projiziert wird.

7. Verfahren nach Anspruch 6, bei dem der Bilderzeugungseinheit (8) eine eigene elektronische Steuerung (18) zugeordnet ist, welche den Bildlauf taktet,
**dadurch gekennzeichnet, dass**
die elektronische Steuerung (18) der Bilderzeugungseinheit (8) den Bildlauf mit dem Sektorenfortschritt des 3D-Sektoren-Polarisationsrads (14) derart synchronisiert, dass jedes Einzelbild durch den seiner Polarisation entsprechenden Polarisationssektor (S₁, S₂, S₃, S₄, Sₙ) projiziert wird.

## Geänderte Patentansprüche

### Geänderte Patentansprüche gemäss Regel 137(2) EPÜ.

1. Vorrichtung zur großflächigen Projektion von digitalen Bildern auf eine Bildwand (2), mit einer Lichtquelle (4) und einem Reflektor (6) zum Erzeugen eines Lichtkegels (7) und zum Projizieren des von der Lichtquelle (4) emittierten Lichts durch eine Bilderzeugungseinheit (8) und ein Objektiv (10) auf die Bildwand (2), mit einem mittels eines Schrittmotors (12) schrittweise antreibbaren 3D-Sektoren-Polarisationsrad (14) mit Polarisationssektoren (S₁, S₂, S₃, S₄, Sₙ) in dem Strahlengang des von der Lichtquelle (4) emittierten Lichts, und mit einer elektronischen Steuereinheit (16), die den Motor (12) des 3D-Sektoren-Polarisationsrads (14) taktet und mit dem Bildlauf der Bilderzeugungseinheit (8) derart synchronisiert, dass jedes Einzelbild durch den seiner Polarisation entsprechenden Polarisationssektor (S₁, S₂, S₃, S₄, Sₙ) projiziert wird,
**dadurch gekennzeichnet, dass**
der Bilderzeugungseinheit (8) eine eigene elektronische Steuereinheit (18) zugeordnet ist, welche den Bildlauf taktet und mit dem Sektorenfortschritt des 3D-Sektoren-Polarisationsrads (14) derart synchronisiert, dass jedes Einzelbild durch den seiner Polarisation entsprechenden Polarisationssektor (S1, S2, S3, S4, Sn) projiziert wird.

2. Vorrichtung nach Anspruch 1, wobei das 3D-Sektoren-Polarisationsrad (14) zwischen der Lichtquelle (4) und der Bilderzeugungseinheit (8) angeordnet ist.

3. Vorrichtung nach Anspruch 1, wobei das 3D-Sektoren-Polarisationsrad (14) zwischen der Bilderzeugungseinheit (8) und dem Objektiv (10) angeordnet ist

4. Vorrichtung nach Anspruch 1, wobei das 3D-Sektoren-Polarisationsrad (14) nach dem Objektiv (10) angeordnet ist

5. Verfahren zur großflächigen Projektion von digitalen Bildern auf eine Bildwand (2), bei dem eine Lichtquelle (4) Licht emittiert, welches mittels eines Reflektors (6) einen Lichtkegel (7) erzeugt und durch eine Bilderzeugungseinheit (8) und ein Objektiv (10) auf die Bildwand (2) projiziert, und bei dem ein mittels eines Schrittmotors (12) schrittweise antreibbares 3D-Sektoren-Polarisationsrad (14) mit Polarisationssektoren (S₁, S₂, S₃, S₄, Sₙ) in dem Strahlengang des von der Lichtquelle (4) emittierten Lichts rotiert, wobei eine elektronische Steuereinheit (16), die wahlweise eine Masterfunktion im Synchronisationszusammenspiel zwischen der Bilderzeugungseinheit (8) und dem 3D-Sektoren-Polarisationsrad (14) ausüben kann, den Schrittmotor (12) taktet und die schrittweise Drehung des 3D-Sektoren-Polarisationsrads (14) derart mit dem Bildlauf der Bilderzeugungseinheit (8) synchronisiert, dass jedes Einzelbild durch den seiner Polarisation entsprechenden Polarisationssektor (S₁, S₂, S₃, S₄, Sₙ) projiziert wird, und wobei der Bilderzeugungseinheit (8) eine weitere elektronische Steuereinheit (18) zugeordnet ist, die alternativ zur Steuereinheit (16) des Schrittmotors (12) eine Masterfunktion im Synchronisationszusammenspiel zwischen der Bilderzeugungseinheit (8) und dem 3D-Sektoren-Polarisationsrad (14) ausüben kann.
